# FASCICULE DE BREVET EUROPEEN

(11) **EP 0 596 105 B1**
(45) Date de publication et mention de la délivrance du brevet: **28.05.2003**
(21) Numéro de dépôt: 93918741.5
(22) Date de dépôt: 09.03.1993
(51) Int. Cl.: G02C 11/00

(54) **EMBOUT DE FIXATION DES CHAINETTES, CORDONS ET BANDEAUX SUR LES BRANCHES DES LUNETTES**
ANORDNUNG ZUR BEFESTIGUNG VON DÜNNEN KETTEN, SCHNÜREN UND RIEMEN AN BRILLENBÜGELN
DEVICE FOR SECURING SMALL CHAINS, CORDS AND STRAPS TO SPECTACLE ARMS

(30) Priorité: 11.03.1992 FR 9202899
(43) Date de publication de la demande: 11.05.1994
(73) Titulaire: GIRARD, Edouard, F-94170 Le Perreux (FR)
(72) Inventeur: GIRARD, Edouard, F-94170 Le Perreux (FR)
(74) Mandataire: Breese, Pierre
(86) Numéro de dépôt international: FR9300231
(87) Numéro de publication internationale: WO93018430

(56) Documents cités:
- FR-A- 2 481 814
- GB-A- 2 153 103
- US-A- 3 827 790
- US-A- 3 874 776
- US-A- 4 922 581
- US-A- 4 965 913
- US-A- 5 015 085
- US-A- 5 092 668

## Description

Les embouts de fixation des chainettes et cordons sont constitués soit par le système de pinces qui se referment sur la branche des lunettes, soit le système le plus généralement employé qui consiste en un anneau élastique qui se glisse sur la branche et se resserre par un tube qui coulisse sur cet anneau. Le premier système ne s'adapte qu'à une petite partie des lunettes, il est génant sur les tempes et ne permet pas une assez bonne fiabilité dans les mouvements de l'utilisateur.

Le système à un anneau élastique est le plus courant, il est pratique, mais il manque d'adhésion sur les branches des lunettes, la bague cylndrique se desserre et l'anneau glisse sur les branches, obligeant l'utilisateur à repositionner et à resserrer l'anneau, le second inconvénient et non des moindres provient de la fragilité de l'anneau, qui même fabriqué dans le meilleur matériau connu, le néoprène, se casse assez rapidement.

Cette rupture est dûe à la faiblesse de l'anneau pour assumer les tensions qui le sollicitent, et au pincement constant qu'il subit contre la bague métallique qui en le bloquant contre la branche, le blesse.

Des attaches comportant un anneau souple passant au travers d'une bague ou d'un ressort cylindrique sont connues des documents US-A-3874776, US-A-4965913 ou US-A-5092668.

Le dispositif selon l'invention remédie à ces inconvénients, en réalisant une double fixation avec un seul embout, qui se traduit par une adhésion systématique et constante, dès son positionnement et garantit une solidité sans problème, pour un usage largement prolongé, que les tests effectués permettent d'estimer a plus du double

Ce dispositif de fixation comporte un double système d'attaches, réalisé par deux anneaux souples, d'enlacement de la branche (1 et 1') de préférence en néoprène ou silicone ; passant au travers d'une bague de serrage cylindrique (2) en formant à la sortie de la bague (2) une boucle (4) dans laquelle se glisse la branche des lunettes.

Ce dispositif est complété par un anneau faculta tif de renforcement (3) également en néoprène ou silicone, se positionnant perpendiculairement aux anneaux d'enlacement (1 et 1') à la sortie de la bague (2).

Dans une réalisation préférentielle, non limitative, le dispositif selon l'invention comporte deux anneaux élastiques, de préférence en néoprène ou silicone, ces anneaux reunis passent au travers d'une bague cylindrique, d'une longueur appropriée au dispositif, puis à la sortie de cette bague, au travers d'un petit anneau, lui aussi de préférence en néoprène, qui les enserre perpendiculairement, et assez fortement. En effet, le petit anneau étrangle en partie les deux anneaux d'enlacement des branches et empêche le recul de la compression exercée au passage de la branche. Cette compression prisonnière se répartit sur les anneaux d'enlacement et se maintient constante autour de la branche des lunettes, créant une adhésion maximale.

Cette adhésion reste valable et efficace pour les petites branches métalliques pour lesquelles ont doit avoir recours au resserrage des anneaux d'enlacement par la bague cylindrique.

Le dispositif selon l'invention à encore l'avantage d'obtenir d'emblée une très forte adhésion des anneaux d'enlacement sur la branche des lunettes, ceci avec ou sans le recours, du serrage par la bague cylindrique.

La bague cylindrique avec sa longueur appropriée, additionnée à l'épaisseur du petit anneau, n'a plus, selon la grosseur des branches des lunettes, que peu ou pas de jeu pour coulisser et, dans la plupart des cas, notamment pour toutes les branches en plastique, le serrage s'obtient uniquement par l'élasticité conjuguée des trois anneaux.

Cette élasticité est obtenue par l'emploi d'une plus grande dimension des anneaux d'enlacement des branches que requiert le dispositif, pour traverser à la fois la bague cylindrique, elle même déjà plus longue et l'anneau perpendiculaire, permettant ainsi une disponibilité d'élasticité proportionnelle à la longueur des anneaux, donc plus grande et suffisante pour équiper les différentes grosseurs de branches des lunettes en usage.

Le petit anneau par sa position perpendiculaire aux deux grands, les protège en leur permettant de s'appuyer sur lui en souplesse et ne plus venir en contact direct avec la bague cylindrique qui est constituée dans un matériau dur, le plus souvent en métal et qui est généralement cause de la coupure de l'anneau.

Par l'interposition du petit anneau perpendiculaire, le dispositif selon l'invention a aussi l'avantage de protéger les branches des lunettes, la bague métallique ne venent plus en contact direct avec elles, leur évite les rayures dûes au frottement.

Le même dispositif selon l'invention peut éventuellement s'obtenir à partir d'une bague monobloc à deux cylindres, chacun des anneaux d'enlacement des branches, passant dans un cylindre.

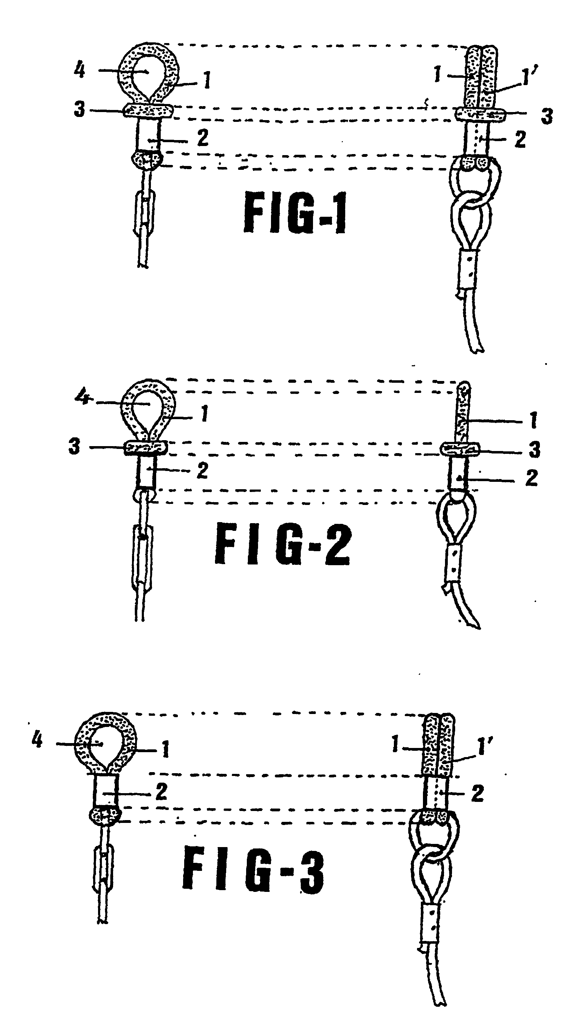

Dans un exemple comparatif FIG 2, le dispositif est réalisé en partant du même principe et des mêmes éléments de base, mais en en utilisant qu'un seul anneau pour l'enlacement de la branche des lunettes, mais ce dispositif bénéficie à un degré moindre, des avantages du dispositif préférentiel.

Une version simplifiée du dispositif selon l'invention FIG 3 consiste à ne conserver que les deux anneaux d'enlacement des branches en utilisant une bague mono-cylindrique ou bi-cylindrique. Cette version apporte encore par rapport aux fixations traditionnelles certains avantages : une double adhésion sur la branche des lunettes et une double résistance des fixations.

Le dispositif selon l'invention dans ses différentes versions, s'adapte à tous les supports de lunettes, cordons, chainettes, bandeaux etc...

La figure 1 représente le dispositif selon l'invention dans une réalisation préférentielle, il comporte deux anneaux souples (1) et (1') de préférence en néoprène, ces anneaux passent au travers d'une bague cylindrique (2) en métal ou en tout autre matériau, ensuite ils passent au travers d'un anneau (3) également en néoprène qui les enserre perpendiculairement ; ils forment alors une double boucles (4) au travers de laquelle se glisse la branche des lunettes, que les anneaux d'enlacement (1) et (1') qui forment cette double boucle (4) enserrent fortement soit par le fait de leur élasticité si la branche est plus forte de section que l'ouverture de la boucle soit par resserrement de la bague cylindrique (2), si elle est plus faible.

La figure 2 représente le dispositif selon un exemple comparatif dans une version qui n'utilise qu'un seul anneau (1) pour enlacer la branche des lunettes, cet anneau passe tout comme dans le dispositif selon la FIG 1, dans une bague cylindrique (2) et au travers d'un petit anneau (3).

La figure 3 représente le dispositif selon l'invention dans une version simplifiée, il comporte deux anneaux souples (1) et (1') et une bague cylindrique (2) dont les dimensions sont coordonnées pour s'adapter à toutes les branches des lunettes et confère une double adhésion et une double résistance à la fixation.

Le dispositif selon l'invention est plus particulièrement destinée à l'industrie de la lunetterie.

## Revendications

1. Dispositif de fixation de chaînettes, cordons et bandeaux sur les branches de lunettes, comportant un anneau souple (1) passant au travers d'une bague de serrage cylindrique (2) pour former à la sortie de ladite bague (2) une boucle (4) d'enlacement de la branche des lunettes, ainsi qu' au moins un anneau souple additionnel, **caractérisé en ce que** l'anneau souple additionnel est constitué par un deuxième anneau (1') d'enlacement passant au travers de la bague (2).

2. Dispositif de fixation de chaînettes, cordons et bandeaux selon la revendication 1, **caractérisé en ce qu'**il comporte un second anneau souple additionnel constitué par un anneau (3) se positionnant perpendiculairement à l'anneau souple (1) d'enlacement.

3. Dispositif de fixation de chaînettes, cordons et bandeaux selon l'une quelconque des revendications précédentes, **caractérisé en ce que** les dimensions de la bague cylindrique (2) et celle du ou des anneaux d'enlacement (1, 1') sont coordonnées pour que l'élasticité qui en résulte permette au dispositif de s'adapter à l'ensemble des branches des lunettes.

4. Dispositif de fixation de chaînettes, cordons et bandeaux selon l'une quelconque des revendications précédentes, **caractérisé en ce que** la bague cylindrique (2) est monobloc à deux cylindres, chacun des anneaux passant respectivement par un des cylindres.

5. Dispositif de fixation de chaînettes, cordons et bandeaux selon l'une quelconque des revendications précédentes, **caractérisé en ce que** le ou les anneaux souples additionnels sont réalisés en néoprène ou silicone.

## Claims

1. A device for fastening chains, cords and ribbons to the stems of eyeglasses comprising a flexible ring (1) passing through a cylindrical clamping ring (2) to form at the end of said ring (2) a loop (4) for passing over the stem of the eyeglasses and at least one additional flexible ring, **characterized in that** the additional flexible ring is comprised of at least a second fastening ring (1') passing through the ring (2).

2. A device for fastening chains, cords and ribbons according to Claim 1, wherein it comprises a second additional flexible ring comprised of a ring (3) positioned perpendicularly to the fastening flexible ring (1).

3. A device for fastening chains, cords and ribbons according to any one of the above claims, wherein the dimensions of the cylindrical ring (2) and that of the fastening ring(s) (1, 1') are coordinated so that the resulting elasticity enables the device to adapt to the assembly of the eyeglass stems.

4. A device for fastening a chains, cords, and ribbons according to any one of the above claims, wherein the cylindrical ring (2) is in monoblock having two cylinders, each of said rings passing through the respective cylinder.

5. A device for fastening chains, cords, and ribbons according to any one of the above claims, wherein the additional flexible rings are made of neoprene or silicone.

## Patentansprüche

1. Vorrichtung zur Befestigung von Kettchen, Kordeln und Bändern an den Brillenbügeln, mit einer weichen Öse (1), die durch einen zylindrischen Spannring (2) führt und am Ausgang des besagten Rings (2) eine Schlaufe (4) zur Fixierung am Brillenbügel bildet, sowie mindestens eine zusätzliche weiche Öse, **dadurch gekennzeichnet, dass** die zusätzliche weiche Öse eine zweite Fixierungsöse (1') bildet, die durch den Ring (2) geführt wird.

2. Vorrichtung zu Befestigung von Kettchen, Kordeln und Bändern nach Anspruch 1, **dadurch gekennzeichnet, dass** sie eine zweite, zusätzliche weiche Öse umfasst, bestehend aus einem Ring (3), der senkrecht zur weichen Befestigungsöse (1) angeordnet ist.

3. Vorrichtung zu Befestigung von Kettchen, Kordeln und Bändern nach einem der vorherigen Ansprüche, **dadurch gekennzeichnet, dass** die Abmessungen des zylindrischen Rings (2) und die der Befestigungsöse (1, 1') aufeinander abgestimmt sind, damit die resultierende Elastizität die Anpassung der Vorrichtung an die Brillenbügelkonstruktion ermöglicht.

4. Vorrichtung zu Befestigung von Kettchen, Kordeln und Bändern nach einem der vorherigen Ansprüche, **dadurch gekennzeichnet, dass** der zylindrische Ring (2) aus einem Stück mit zwei Zylindern besteht, wobei jeder Ringe jeweils durch einen der Zylinder führt.

5. Vorrichtung zu Befestigung von Kettchen, Kordeln und Bändern nach einem der vorherigen Ansprüche, **dadurch gekennzeichnet, dass** die zusätzliche(n) weiche Öse(n) aus Neopren oder Silikon besteht/bestehen.
